# EUROPÄISCHE PATENTANMELDUNG

(11) **EP 2 299 195 A2**
(43) Veröffentlichungstag der Anmeldung: **23.03.2011**
(21) Anmeldenummer: 10174368.0
(22) Anmeldetag: 27.08.2010
(51) Int. Cl.: F24F 3/16

(54) **Filterpaket mit einem flächigen Trägermaterial**

(30) Priorität: 28.08.2009 DE 202009011629 U
(71) Anmelder: Strauss, Dr.-Ing., Rolf-Peter, 28215 Bremen (DE)
(72) Erfinder: Strauss, Dr.-Ing., Rolf-Peter, 28215 Bremen (DE)
(74) Vertreter: Tappe, Udo

(57) **Zusammenfassung**

Die Erfindung betrifft ein Faltpaket für eine Wärmeübertragung zwischen fluiden Medien, insbesondere Luft, für einen Wärmeübertrager und/oder eine Lüftungsanlage mit Kanälen (15, 16), die durch mäanderförmiges Falten eines flächigen Materials (11) ausgebildet sind, wobei an Enden der Kanäle (15, 16) Faltenkanten (17) und über die Länge der Kanäle (15, 16) Faltensättel (18) ausgebildet sind, und mit einer Ausgestaltung als ein austauschbares Wechselmodul. Zur Reduzierung des Aufwandes einer Wartung und/oder Reparatur sowie zur Verminderung der damit verbundenen Kosten ist das Faltpaket **dadurch gekennzeichnet, dass** das Wechselmodul zusätzlich zur Ausbildung für die Wärmeübertragung zusätzlich Filtermittel (19, 22) für eine Filterung des fluiden Mediums aufweist.

## Beschreibung

Die Erfindung betrifft ein Filterpaket mit einem flächigen Trägermaterial.

Bei Filtern ist üblicherweise die Filterwirkung in Konkurrenz zum hervorgerufenen Strömungswiderstand. Für eine gute Filterwirkung sind geringe Größen der Filterporen erforderlich. Diese führen abhängig von der Materialdicke des Filters aber zu einem hohen Strömungswiderstand. Aus diesem Grund ist es für eine gute Filterwirkung bei geringem Strömungsverlust zweckmäßig, den Filter flächig mit einer großen Oberfläche und einer geringen Materialdick zu gestalten. Dies führt jedoch zu einem großen Platzbedarf und verhindert einen kompakten Aufbau. Es gibt Faltenfilter, die eine große Oberfläche bei verhältnismäßig geringem Platzbedarf haben. Diese Faltenfilter eignen sich jedoch nur für kleinere Anwendungen und haben insbesondere das Problem, dass sie Verstopfen oder zufallen können.

Aus der US 4,040,804 ist ein Faltpaket für einen Wärmetauscher bekannt. Im Vergleich zu beispielsweise konventionellen Plattenwärmetauschern, bei denen häufig in den Randbereichen der mit einander zu verbindenden einzelnen Platten eine Undichtigkeit auftritt, ist bei dem bekannten Faltpaket aufgrund der mäanderförmigen Faltung bereits eine Vielzahl von Kanten gut abgedichtet. Somit erfolgt im Bereich der Faltensättel aufgrund der Faltung eine automatische Abdichtung.

Nachteilig ist bei dem bekannten Faltpaket, dass dieses aufgrund von eintretenden Verschmutzungen gereinigt oder ausgetauscht werden muss. Der entsprechende Wartungs- und/oder Reparaturaufwand ist mit entsprechenden Personal- und Materialkosten verbunden.

Des Weiteren ist bekannt, dass bei einer Lüftungsanlage mit einem Wärmeübertrager, insbesondere bei einem Zusammenwirken mit einer Lüftungsanlage, Filter eingesetzt werden, um Verunreinigungen der Luft zu entfernen. Die entsprechenden Filter müssen regelmäßig gereinigt und/oder ausgetauscht werden. Der notwendige Wartungs- und/oder Reparaturaufwand ist mit entsprechenden Kosten für Personal und/oder Material verbunden.

Es ist das der Erfindung zugrunde liegende Problem, ein Filterpaket anzugeben mit dem sich eine gute Filterwirkung bei geringem Strömungswiderstand und der Möglichkeit zu einem kompakten Aufbau erzielen lässt.

Das Problem wird gelöst durch ein Filterpaket mit einem flächigen Trägermaterial und mit einem Filtermittel, das zwischen zwei einander benachbarten Lagen des flächigen Trägermaterial angeordnet ist, wobei ein Durchströmen der Filtermittel parallel zu dem flächigen Trägermaterial gerichtet erfolgt.

Auf diese Weise kann das Filtermaterial auf geeignete Weise mit vergrößerter Oberfläche zwischen den einander benachbarten Lagen des Trägermaterials angeordnet werden, um so einen geringen Strömungswiderstand aufgrund der geringen Materialdicke des Filtermittels zu erzielen. Gleichzeitig ist eine große Oberfläche bei kompaktem Aufbau möglich, da das Trägermaterial die erforderliche Steifigkeit aufweist, um das Filtermittel auch bei großem und komplexem und damit kompaktem Aufbau anströmbar zu halten. Es werden auf diese Weise mehrdimensional Filterverschachtelungen möglich. Das Filtermittel kann einlagig oder mehrlagig zwischen den einander benachbarten Lagen des flächigen Trägermaterials angeordnet sein und beispielsweise im Meltblown-Verfahren auf dieses aufgebracht werden.

Beispielweise kann das Filterpaket eine Vielzahl Lagen des flächigen Trägermaterials mit zwischen benachbarten Lagen des flächigen Trägermaterials angeordnetem Filtermittel aufweisen. Es ist aber auch eine stapelförmige Anordnung der Lagen des flächigen Trägermaterials möglich mit zwischen benachbarten Lagen des flächigen Trägermaterials angeordnetem Filtermittel. Darüber hinaus kann aber auch eine spiralförmige Anordnung des flächigen Trägermaterials vorgesehen sein mit zwischen benachbarten Lagen des flächigen Trägermaterials angeordnetem Filtermittel. In all diesen Fällen lässt sich das Filtermittel mit vergrößerter Oberfläche, beispielsweise als mäanderförmig oder zickzackförmig angeordnetes Band, zwischen den Lagen des flächigen Trägermaterial anordnen, so dass eine große Oberfläche anströmbar bereit gestellt und durch das Trägermaterial bereit gehalten wird.

Wenn das Filterpaket ein Faltpaket hat, das Kanäle aufweist, die durch mäanderförmiges Falten eines flächigen Materials ausgebildet sind und in denen das Filtermittel angeordnet ist, kann das Faltpaket sowohl für die Wärmeübertragung als auch zum Filtern eines fluiden Mediums genutzt werden. Während bisher zwei eigenständige Elemente für die Wärmeübertragung einerseits und die Filterung des Fluids andererseits notwendig waren, sind die Funktionen der beiden bisherigen Elemente, nämlich Wärmeübertragung und Filterung, mittels des weitergebildeten Filterpaketes in einem einzigen Element vereint. Aufgrund der kombinierten Funktion von Wärmeübertragung und Filterung ist es nunmehr nicht mehr notwendig zwei unterschiedliche Elemente - nämlich ein bisher übliches Faltpaket und einen Filter - zu reinigen und/oder auszutauschen, sondern es muss lediglich ein einzelnes Element in der Gestalt des erfindungsgemäßen Filterpakets entsprechend gewartet und/oder ausgetauscht werden. Hierdurch wird der Wartungs- und/oder Reparaturaufwand erheblich reduziert und die damit verbundenen Kosten vermindert. Vorzugsweise weist das mäanderförmig gefaltete flächige Material im Bereich der Faltenkanten eine Randabdeckung und/oder im mittleren Bereich der Faltensättel eine Zentralabdeckung auf. Hierdurch wird das Faltpaket unter anderem stabilisiert und ist somit insbesondere beim Austausch bzw. der Montage leichter handhabbar.

Nach einer Weiterbildung ist das Filtermittel ein Vliessmaterial. Vorzugsweise füllt das Filtermittel den gesamten Querschnitt der Kanäle aus. Hierdurch ist gewährleistet, dass das gesamte durch die Kanäle strömende Fluid das Filtermittel durchströmt. Als Filtermaterial können für das Filtermittel sämtliche geeignete Materialien verwendet werden. So weisen beispielsweise Vliessmaterialien hinreichende Filtereigenschaften auf und sind zugleich kostengünstig in der Herstellung, beispielsweise mittels eines Meltblown-Verfahrens.

Gemäß einer weiteren Ausführungsform sind die Filtermittel, insbesondere in Bezug auf die Längsausdehnung der Kanäle, als ein schmales Band ausgebildet, wobei die Höhe des Bandes, insbesondere im nicht eingebauten Zustand, bevorzugt 1 mm bis 20 mm, besonders bevorzugt 1 mm bis 5 mm und am meisten bevorzugt 1 mm bis 2 mm beträgt. Somit sind die Kanäle nicht vollständig in Längsrichtung mit dem Filtermittel ausgefüllt. Stattdessen sind die Filtermittel so schmal wie möglich ausgebildet. Hierbei ist zu beachten, dass eine hinreichende Filterwirkung gewährleistet ist. Eine weitere Oberflächenvergrößerung lässt sich erreichen, wenn das Band wechselweise seitlich angeordnete Querschlitze aufweist. Die Querschlitze können gerade, gewinkelt, V-förmig, rechtwinklig, schräg oder gewunden sein.

Hierbei ergibt sich eine mäanderförmige Anordnung des Bandes mit vergrößerter anströmbarer Oberfläche. Aufgrund der Gestaltung des Filtermittels als ein möglichst schmales Band wird erreicht, dass die Durchströmrate und/oder die Durchflussgeschwindigkeit des Fluids durch einen Kanal mit einem Filtermittel gegenüber einem Kanal ohne Filtermittel möglichst wenig beeinflusst wird. Die durch die Filterung auftretenden Strömungsverluste werden somit deutlich reduziert. Vorzugsweise durchströmt das fluide Medium beim Durchströmen des Kanals genau einmal den Querschnitt des Filtermittels. Hierdurch ist vermieden, dass das fluide Medium das Filtermittel mehrmals durchströmt, wodurch gewährleistet ist, dass lediglich möglichst geringe Strömungsverluste auftreten.

Entsprechend einer Weiterbildung ist das Filtermittel als Abstandshalter für einen definierten Abstand zwischen den Lagen, insbesondere den Kanalwänden, ausgebildet, wobei der Abstand bevorzugt 0,1 mm bis 0,5 mm, insbesondere 0,1 mm bis 0,3 mm vorzugsweise 0,2 mm beträgt. Somit führt das Filtermittel neben der Funktion der Filterung des fluiden Mediums eine weitere zusätzliche Funktion als Abstandshalter aus. Hierdurch kann auf zusätzliche Elemente als Abstandshalter verzichtet werden. Dies führt zu einer Vereinfachung der Herstellung und reduziert somit die Kosten.

Gemäß einer auch eigenständig und unabhängig von der Erfindung anwendbaren Ausführung ist das Filtermittel fadenförmig ausgebildet. Ein derartiges fadenförmiges Filtermittel kann einen geringen Querschnitt aufweisen und ist dennoch gut zu verarbeiten. Aufgrund des geringen Querschnittes und einer geeigneten Anordnung des fadenförmigen Filtermittels lassen sich Filter realisieren, die einerseits zugunsten einer hohen Filterleistung eine große Oberfläche aufweisen und andererseits nur geringe Strömungsverluste verursachen. Vorzugsweise ist das fadenförmige Filtermittel längs zur Strömungsrichtung zickzackartig angeordnet. Hierbei erfolgt die zickzackartige und/oder schleifenartige Anordnung des fadenförmigen Filtermittels in den Kanälen derart, dass, insbesondere im Bereich der Zentralabdeckung, sich in Längsausdehnung der Kanäle bzw. der Strömungsrichtung des fluiden Mediums eine möglichst große angeströmte Oberfläche ergibt. Hierbei sind einzelne Fadenstränge quer zur Strömungsrichtung des fluiden Mediums nebeneinander angeordnet. Insbesondere ist zwischen zwei nebeneinander angeordneten Fadensträngen des, insbesondere zickzackartig angeordneten, fadenförmigen Filtermittels ein spitzer Winkel aufgespannt. Die Kanäle des Faltpaketes müssen zur Wärmeübertragung eine bestimmte aktive Mindestlänge aufweisen, damit eine hinreichende Wärmeübertragung gewährleistet ist. Hierbei gilt, je länger die Kanäle und damit die Wechselwirkung zwischen den fluiden Medien und dem Faltpaket, desto besser ist die Wärmeübertragung. Bei einem Filter gilt jedoch, dass die Strömungsverluste umso größer sind, je kleiner die Filterporen und/oder je dicker das zu durchströmende Filtermittel ist. Aufgrund der zickzackförmigen Anordnung des fadenförmigen Filtermittels in den Kanälen längs zur Strömungsrichtung wird nun erreicht, dass die unterschiedlichen Anforderungen an eine Wärmeübertragung einerseits und an eine Filterung andererseits gleichzeitig erfüllt werden. Aufgrund der großen Oberfläche wird eine hinreichende Filterung gewährleistet, während zugleich aufgrund der geringen Materialdicke des zu durchströmenden fadenförmigen Filtermittels lediglich geringe Strömungsverluste auftreten.

Eine andere Ausführungsform der Erfindung zeichnet sich dadurch aus, dass das Filtermittel auf einem streifenförmigen Trägermaterial angeordnet ist. Auf diese Weise kann das Filtermittel einfach und präzise auf das flächige Material für das Faltpaket aufgebracht werden. Es ist aber auch möglich, dass das streifenförmige Trägermaterial selbst als das flächige Trägermaterial aufgerollt oder übereinander gestapelt wird. Für das streifenförmige Trägermaterial eignet sich beispielsweise ein selbstklebender Klebestreifen.

Wieder eine andere Weiterbildung der Erfindung ist gekennzeichnet durch eine Ausbildung als Wärmeübertrager, insbesondere für eine Lüftungsanlage. Hierbei eine gute Filterwirkung bei geringen Strömungsverlusten möglich, was gleichzeitig eine hohe Effizienz bei der Wärmeübertragung begünstigt. Wenn darüber hinaus das Filterpaket eine Ausgestaltung als austauschbares Wechselmodul aufweist, lassen sich Wartungsarbeiten sowohl bei einem reine Filterpaket als auch bei der Ausgestaltung als Wärmetauscher erheblich erleichtern.

Nach einer weiteren Ausführungsform ist das Filtermittel im mittleren Bereich der Faltensättel angeordnet, wobei vorzugsweise das Filtermittel den gesamten Querschnitt des Kanals zwischen den Kanalwänden und einer im mittleren Bereich der Faltensättel angeordneten Zentralabdeckung ausfüllt. Hierdurch ist auf effektive Weise gewährleistet, dass das gesamte durch den Kanal mit dem Filtermittel strömende Fluid durch das Filtermittel strömt. Somit ist sicher gestellt, dass das gesamte fluide Medium gefiltert wird.

Vorzugsweise ist das Filtermittel vor dem Ausbilden der Kanäle auf das flächige Material aufgebracht. Hierdurch ist das Einarbeiten des Filtermittels in die Kanäle des Faltpaketes besonders einfach realisierbar. So lässt sich das Filtermittel flächig auf das ebene, flächige Material, insbesondere mittels eines Klebeverfahrens, aufbringen. Erst hiernach erfolgt das mäanderförmige Falten des flächigen Materials. Aufgrund des geeigneten Faltens des flächigen Materials füllt das zuvor aufgebrachte Filtermittel automatisch den Querschnitt der Kanäle aus. Insbesondere wird das Filtermittel in der Gestalt eines schmalen Bandes auf das flächige Material aufgebracht. Die Länge des schmalen Bandes entspricht hierbei vorzugsweise der Länge des flächigen Materials, während die Breite des flächigen Materials die Länge der Kanäle bestimmt. Vorzugsweise ist das Filtermittel lediglich im Bereich der späteren Kanäle auf das flächige Material aufgebracht, so dass der Bereich der Faltensättel kein Filtermittel aufweist. Hierdurch ist die Zentralabdeckung unmittelbar mit den Faltensätteln des flächigen Materials verbindbar.

Gemäß einer Weiterbildung ist das Filtermittel auf der zuflussseitigen und/oder abflussseitigen Seite des flächigen Materials aufgebracht. Demnach wird das zuflussseitige fluide Medium und/oder das abflussseitige fluide Medium gefiltert. Auf der Seite ohne Filtermittel sind vorzugsweise Abstandshalter für einen definierten Abstand der Kanalwände voneinander vorgesehen. Sowohl aufgrund der Funktion des Filtermittels als Abstandshalter als auch mittels separater Abstandshalter wird sichergestellt, dass die einzelnen Kanäle ähnliche Charakteristika aufweisen. Hierdurch ist beispielsweise gewährleistet, dass das Gesamtergebnis des Wärmeübertragers nicht durch einzelne schlecht funktionierende Kanäle negativ beeinflusst wird. Als separater Abstandshalter kann das flächige Material beispielsweise eine Prägung aufweisen. Eine derartige Ausgestaltung ist technisch besonders einfach herstellbar.

Gemäß einer weiteren Ausführungsform ist bei einem einseitig auf das flächige Material aufgebrachten Filtermittel der Abstand der Kanalwände, insbesondere zum Realisieren einer gleichen Durchströmrate auf der zuflussseitigen und abflussseitigen Seite des flächigen Materials, auf der Seite des flächigen Materials mit dem Filtermittel größer als auf der Seite ohne Filtermittel. Somit werden unterschiedliche Kanalquerschnitte realisiert. Hierdurch ist gewährleistet, dass gleiche Mengen des fluiden Mediums pro Zeiteinheit durch die zuflussseitigen und abflussseitigen Kanäle strömen.

Das flächige Material und/oder das Filtermaterial kann als ein hydrophiles, vorzugsweise ein eine Flüssigkeit einsaugendes und/oder ein für die Flüssigkeit durchlässiges, Material ausgebildet sein. Das flächige Material, welches die im Gegenstromverfahren durch das Faltpaket strömenden fluiden Medien voneinander trennt, ist hydrophil, um beispielsweise eventuell entstehendes Kondensat aufzusaugen. Hierdurch wird eine Tropfenbildung innerhalb der Kanäle verhindert, wodurch sich die Kanäle nicht zusetzen können. Vorzugsweise besteht das flächige Material mindestens teilweise aus Papier und/oder ist luftdicht. Mindestens teilweise aus Papier bestehende Materialien wie beispielsweise Löschpapier und/oder Filterpapier weisen hinreichende saugende Eigenschaften auf. Augrund der zumindest weitgehend luftdichten Eigenschaften des flächigen Materials ist gewährleistet, dass keine nennenswerte Leckage der Luft aufgrund des flächigen Materials erfolgt. Es ist aber auch möglich, eine Kunstharzfolie als flächiges Material zu verwenden.

Weiter kann die aufgenommene Flüssigkeit flächig in dem flächigen Material und/oder dem Filtermittel verteilbar sein. Augrund einer Durchlässigkeit des flächigen Materials für eine Flüssigkeit, insbesondere flüssiges Wasser, wird auf einer Seite des flächigen Materials kondensiertes Wasser durch das flächige Material auf die andere Seite transportiert. Vorzugsweise wird die Feuchtigkeit von feuchter Abluft an trockene, von außen zugeführte, Außenluft abgegeben. Augrund der flächigen Verteilung der aufgenommenen Flüssigkeit in dem flächigen Material kann, insbesondere unabhängig vom Ort des Kondensatanfalls, eine große mit der Flüssigkeit benetzte Fläche entstehen, an der die Flüssigkeit wieder verdunsten kann.

Entsprechend einer weiteren Ausführungsform weist das flächige Material Viren hemmende, Bakterien hemmende, biozide, fungizide und/oder antiseptische Eigenschaften auf. Somit ist sicher gestellt, dass sich keine gesundheitlich oder hygienisch bedenklichen Luftzustände, insbesondere unter Berücksichtigung von feuchten Bedingungen und/oder einer Anlagerung von Luftschwebstoffen wie beispielsweise Bakterien, Sporen oder dergleichen ergeben.

Vorzugsweise ergibt sich aufgrund der Filtereigenschaften des Wechselmoduls und/oder des Filtermittels eine Abscheidewirkung für Partikel, insbesondere Staub, Pollen und/oder Aerosole. Insbesondere ergibt sich beim Durchströmen des Faltpaktes mit einem fluiden Medium, wie beispielsweise einer zugeführten Außenluft, durch die Kanäle mit, vorzugsweise langsamer, Durchströmgeschwindigkeit eine gute Abscheidewirkung. Somit wirkt das Faltpaket wie ein Filter. Die Filterfunktion des Faltpakets führt dazu, dass das Faltpaket in definierten Intervallen gereinigt und/oder ausgetauscht werden muss.

Vorzugsweise ist das Fluid für das Abscheiden von Partikeln ionisiert. Alternativ oder zusätzlich kann das flächige Material und/oder das Filtermittel elektrostatisch aufgeladen oder geerdet sein und/oder eine photokatalytische Beschichtung aufweisen. Hierdurch ist jeweils eine verbesserte Abscheidung von Partikeln realisierbar. Darüber hinaus sind alternativ oder zusätzlich weitere geeignete Filtermaßnahmen einsetzbar.

Entsprechend einer weiteren Ausführungsform weist das Wechselmodul und/oder der Wärmeübertrager und/ oder die Lüftungsanlage eine definierte Schnittstelle für die Übergabe des Fluids auf. Aufgrund einer solchen definierten Schnittstelle lässt sich das Wechselmodul und/oder der Wärmeübertrager und/oder die Lüftungsanlage besonders einfach modular erweitern. Zudem lassen sich in ihrem Aufbau geänderte Faltpakete, beispielsweise bei einem routinemäßigen Austausch, problemlos anstelle der bisher verwendeten Faltpakete einsetzen. Aufgrund der definierten Schnittstelle sind die Lüftungsanlage und der Wärmeübertrager beziehungsweise das Wechselmodul eigenständige, voneinander getrennte Einheiten.

Bei einer vorteilhaften Weiterbildung der Erfindung ist das Filterpakte gekennzeichnet durch eine Vielzahl Kanäle und Filtermittel, insbesondere eine Vielzahl Filtermittel pro Kanal. Auf diese Weise lässt sich eine große Fläche parallel anströmbarer Kanäle und insbesondere darin angeordneter Filtermittel kompakt bei geringem Platzbedarf anordnen.

Von besonderem Vorteil ist die Verwendung eines erfindungsgemäßen Faltpaketes in einem Wärmeübertrager und/oder einer Lüftungsanlage, insbesondere beim Austausch des Faltpaketes im Rahmen einer Wartung und/oder Instandsetzung. Aufgrund der Reinigung und/oder dem Austausch des erfindungsgemäßen Faltpaketes werden gleichzeitig die Funktionen der Wärmeübertragung und der Filterung gewartet. Hierdurch lässt sich der damit verbundene Aufwand sowie die damit einhergehenden Kosten deutlicher reduzieren.

Ein weiterer Aspekt der Erfindung betrifft einen Wärmeübertrager mit einem erfindungsgemäßen Filterpaket. Ein entsprechender Wärmeübertrager benötigt keinen separaten Filter. Hierdurch ergibt sich ein reduzierter Aufwand bei der Wartung und/oder Instandsetzung.

Nachfolgend werden Ausführungsbeispiele der Erfindung anhand der Zeichnungen näher erläutert. Es zeigen:
- Fig. 1: eine perspektivische Schemadarstellung eines Faltpaketes mit den Erfindungsmerkmalen,
- Fig. 2: eine schematische Teildarstellung eines Faltpaketes mit den Erfindungsmerkmalen,
- Fig. 3: ein schematischer Längsschnitt eines erfindungsgemäßen Faltpaketes,
- Fig. 4: ein erstes flächiges Material mit einem darauf angebrachten Filtermittel,
- Fig. 5: ein zweites flächiges Material mit darauf angebrachten weiteren Filtermitteln,
- Fig. 6: ein drittes flächiges Material mit einem aufgebrachten fadenförmigen Filtermittel,
- Fig. 7: ein bandförmiges Filtermittel mit wechselweise seitlichen Quereinschnitten,
- Fig. 8: ein streifenförmiges Trägermaterial mit darauf angeordnetem fadenförmigen Filtermittel,
- Fig.9: ein weiteres flächiges Material mit einer Vielzahl darauf angeordneter fadenförmiger Filtermittel und vorbereiteter Kanäle,
- Fig. 10: ein Filterpaket als Stapel mehrerer Lagen des streifenförmigen Trägermaterials von Fig. 8 mit dazwischen angeordnetem Filtermittel, und
- Fig. 11: ein Filterpaket als Spirale aus dem streifenförmigen Trägermaterial von Fig. 8 mit dazwischen angeordnetem Filtermaterial.

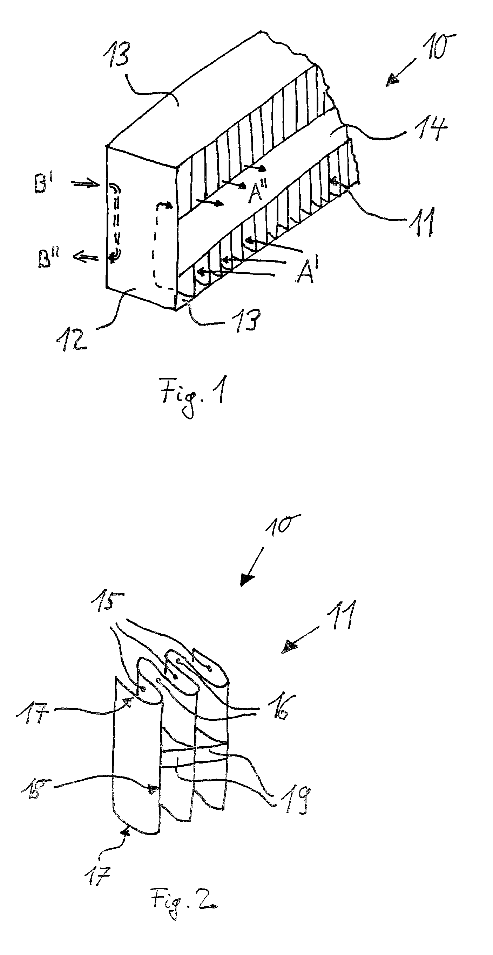

Fig. 1 zeigt eine perspektivische Schemadarstellung eines Faltpaketes 10 mit den Erfindungsmerkmalen. Das Faltpaket 10 weist ein flächiges Material 11 auf, welches mäanderförmig gefaltet ist und hierdurch Kanäle bildet, wie sie nachfolgend in Fig. 2 näher gezeigt sind. Aufgrund der mäanderförmigen Faltung des flächigen Materials 11 sind an Enden der Kanäle Faltenkanten und über die Länge der Kanäle Faltensättel ausgebildet, siehe hierzu ebenfalls Fig. 2. In einem mittleren Bereich des mäanderförmig gefalteten flächigen Materials 11 beziehungsweise der Faltensättel sind Zentralabdeckungen 14 angeordnet, wobei in der Darstellung gemäß Fig. 1 nur eine Zentralabdeckung 14 zu erkennen ist. Stirnseitig ist das Faltpaket 10 mit Abdeckungen 12 versehen, von denen in der Fig. 1 ebenfalls nur eine Abdeckung 12 zu erkennen ist. Im Bereich der Faltenkanten weist das Faltpaket 10 Randabdeckungen 13 auf. Die Abdeckungen 12, 13, 14 können beispielsweise als einfache Kleberstreifen ausgeführt sein.

Ein erstes Fluid strömt gemäß der Pfeile A' in den unteren Bereich der jeweiligen Faltensättel in die zugehörigen Kanäle und tritt im oberen Bereich gemäß der Pfeile A" wieder aus den Kanälen aus. Auf der anderen Seite des Faltpakets 10 strömt ein zweites Fluid gemäß dem Pfeil B' im oberen Bereich in die Kanäle hinein und strömt gemäß dem Pfeil B" im unteren Bereich der Faltensättel aus den Kanälen aus. Hierbei wird jeweils der einströmende Bereich von dem ausströmenden Bereich mittels der Zentralabdeckung 14 voneinander getrennt. Somit werden das erste Fluid und das zweite Fluid in den Kanälen im Gegenstromverfahren aneinander vorbei geleitet. Hierdurch ist eine Wärmeübertragung vom ersten Fluid auf das zweite Fluid oder umgekehrt realisierbar.

Des Weiteren weist das Faltpaket 10 in der Fig. 1 nicht näher dargestellte Filtermittel für eine Filterung des fluiden Mediums auf. Diese Filtermittel sind im Bereich der Zentralabdeckung 14 in den Kanälen des mäanderförmig gefalteten flächigen Materials 11 angeordnet. Somit werden die Fluide beim Durchströmen des Faltpakets 10 zur Wärmeübertragung zugleich gefiltert.

Fig. 2 zeigt das mäanderförmig gefaltete flächige Material 11 des Faltpaketes 10 in einer perspektivischen Darstellung. Das flächige Material 11 besteht mindestens teilweise aus Papier und ist in dem hier gezeigten Ausführungsbeispiel aus Löschpapier hergestellt. Wie sich der Fig. 2 entnehmen lässt, werden aufgrund der mäanderförmigen Faltung des flächigen Materials 11 aufeinander folgend und parallel zueinander Kanäle 15, 16 gebildet. Hierbei sind die Kanäle 15 dem zweiten Fluid gemäß den Strömungspfeilen B', B" und die Kanäle 16 dem ersten Fluid gemäß den Strömungspfeilen A', A" zugeordnet. An den Enden der Kanäle 15, 16 sind Faltenkanten 17 und über die Länge der Kanäle 15, 16 Faltensättel 18 ausgebildet. Weiter zeigt die Fig. 2, dass in den Kanälen 16 Filtermittel 19 angeordnet sind. Diese Filtermittel sind als ein schmales Band mit möglichst geringer Höhe ausgebildet.

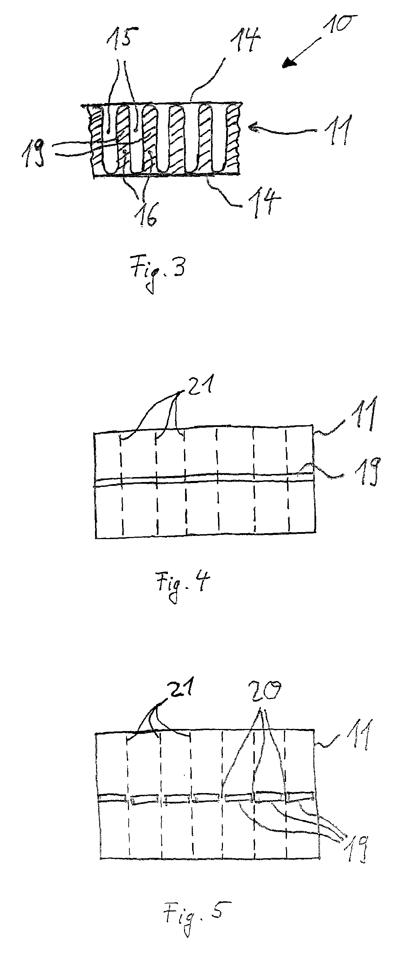

Fig. 3 zeigt einen Ausschnitt eines Längsschnittes eines erfindungsgemäßen Faltpaketes 10. Wie der Fig. 3 zu entnehmen ist, werden die Kanäle 15, 16, die durch das mäanderförmige Falten des flächigen Materials 11 entstanden sind, im Bereich der Faltensättel mittels der Zentralabdeckungen 14 begrenzt und abgeschlossen. In dem hier gezeigten

Ausführungsbeispiel ist in den Kanälen 16 das Filtermittel 19 angeordnet. In den Kanälen 15 befindet sich in dem hier gezeigten Ausführungsbeispiel dagegen kein Filtermittel 19. Bei den Kanälen 16 dient das Filtermittel 19 zugleich als Abstandshalter für die Kanalwände der Kanäle 16. Für die Kanäle 15 können separate Abstandshalter eingesetzt werden. Beispielsweise kann eine geeignete Prägung des flächigen Materials 11 als Abstandshalter für die Kanalwände der Kanäle 15 dienen. Alternativ zu dem gemäß Fig. 3 gezeigten Ausführungsbeispiel ist es auch möglich, dass sowohl in den Kanälen 15 als auch in den Kanälen 16 Filtermittel 19 angeordnet sind.

Fig. 4 zeigt ein erstes flächiges Material 11 vor dem mäanderförmigen Falten zum Ausbilden der Kanäle 15, 16. Auf das flächige Material 11 ist mittig und parallel zur Längsausrichtung des flächigen Materials 11 ein Filtermittel 19 aufgebracht. Das Aufbringen des Filtermittels 19 kann beispielsweise mittels eines geeigneten Klebemittels erfolgen. Das Filtermittel 19 ist im mittleren Bereich der beim mäanderförmigen Falten entstehenden Faltensättel auf dem flächigen Material 11 aufgebracht. Somit ist das Filtermittel 19 besonders einfach in die Kanäle 15, 16 einbringbar. Mittels gestrichelter Linien sind Faltlinien 21 angedeutet, welche die Lage der bei der Faltung entstehenden Faltensättel bestimmen.

Fig. 5 zeigt ein zweites flächiges Material 11 vor dem mäanderförmigen Falten. Anstelle eines einzelnen Filtermittels 19 in der Gestalt eines einzigen schmalen Bandes im Sinne der Fig. 4 sind nach der Fig. 5 mehrere Filtermittel 19 in der Gestalt von schmalen Bändern in Längsrichtung nebeneinander auf dem flächigen Material 11 in einem mittleren Bereich der später aufgrund der Faltung stehenden Faltensättel angeordnet. Hierbei sind die einzelnen nebeneinander liegenden Filtermittel 19 jeweils mit einem Freiraum 20 voneinander getrennt. Der Freiraum 20 entspricht im Wesentlichen der Breite der bei der Faltung des flächigen Materials 11 entstehenden Faltensättel 18. Hierdurch ist gewährleistet, dass die Zentralabdeckungen 14 unmittelbar auf den Faltensätteln 18 aufliegen.

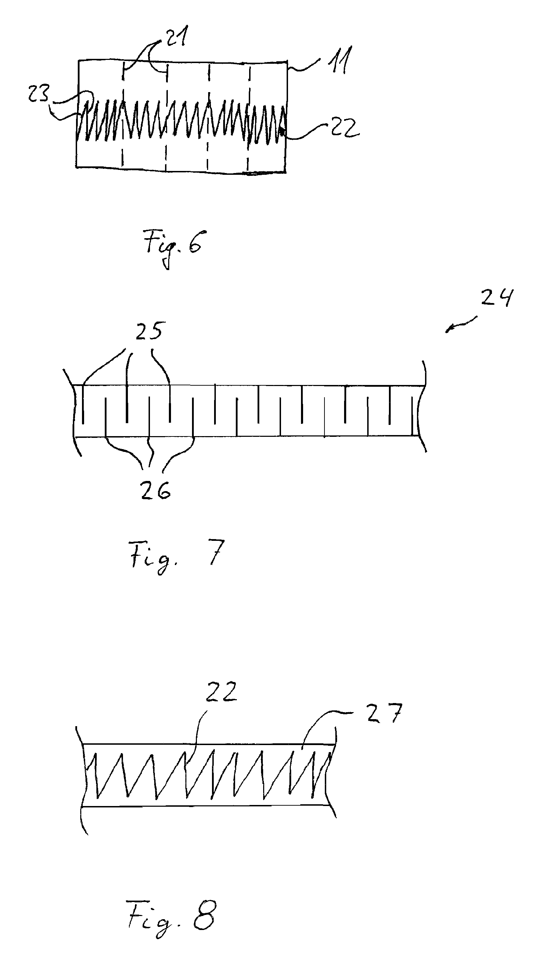

Fig. 6 ist ein drittes flächiges Material 11 vor dem mäanderförmigen Falten im Bereich der Faltlinien 21 zu entnehmen. Hierbei ist im mittleren Bereich der aufgrund der Faltung entstehenden Faltensättel ein fadenförmiges Filtermittel 22 auf dem flächigen Material 11 aufgebracht. Das Aufbringen des Filtermittels 19 kann beispielsweise mittels eines geeigneten Klebemittels erfolgen. Das fadenförmige Filtermittel 22 ist zickzackartig in Längsrichtung der bei der Faltung entstehenden Kanäle angeordnet, wobei einzelne Fadenstränge 23 quer zur Strömungsrichtung des fluiden Mediums nebeneinander angeordnet sind. Hierbei erfolgt die zickzackartige und/oder schleifenartige Anordnung des fadenförmigen Filtermittels 23 in den Kanälen derart, dass sich in Längsausdehnung der Kanäle bzw. der Strömungsrichtung des fluiden Mediums eine möglichst große angeströmte Oberfläche ergibt. Zwischen zwei nebeneinander angeordneten Fadensträngen 23 des, fadenförmigen Filtermittels 22 ein spitzer Winkel aufgespannt. Aufgrund der zickzackförmigen Anordnung des fadenförmigen Filtermittels 22 wird erreicht, dass die unterschiedlichen Anforderungen an eine Wärmeübertragung einerseits und an eine Filterung andererseits gleichzeitig erfüllt werden. Aufgrund der großen angeströmten Oberfläche des zickzackartig angeordneten fadenförmigen Filtermittels 22 wird eine hinreichende Filterung gewährleistet, während zugleich aufgrund des geringen Querschnittes des zu durchströmenden fadenförmigen Filtermittels 22 lediglich geringe Strömungsverluste auftreten.

Fig. 7 zeigt ein bandförmiges Filtermittel 24 mit wechselweise seitlichen Quereinschnitten 25, 26. Das in der Figur gezeigte Filtermittel 24 hat eine flache bandförmige Gestalt. Durch die wechselweise seitlichen Quereinschnitte 25, 26 ergibt sich eine mäanderförmige Struktur, die eine vergrößerte Oberfläche mit sich bringt. Das Bandförmige Filtermittel kann anstelle der Filtermittel 19 oder 22 verwendet werden und hat ähnliche Eigenschaften.

Fig. 8 zeigt ein streifenförmiges Trägermaterial 27 mit darauf angeordneten fadenförmigen Filtermittel 22. Als streifenförmiges Trägermaterial wird im vorliegenden Fall ein selbstklebendes Klebeband verwendet, auf das das fadenförmige Filtermittel 22 zickzackförmig aufgeklebt ist. Auf diese Weise wird das streifenförmige Filtermittel 27 vorkonfektioniert und kann anschließend zum Beispiel auf das flächige Material 11 aufgebracht werden. Auf diese Weise lässt sich eine gute Positionierung erzielen.

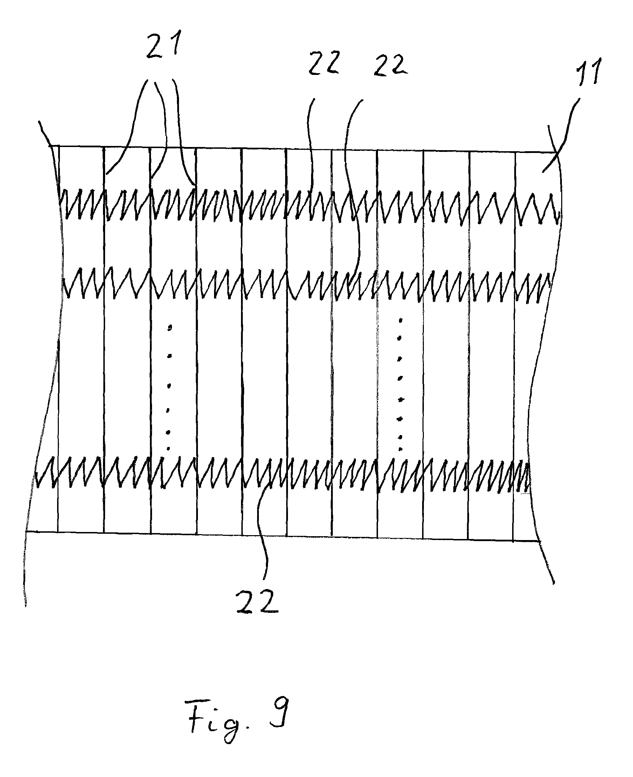

Fig. 9 zeigt ein weiteres flächiges Material 11 mit einer Vielzahl darauf angeordneter fadenförmiger Filtermittel 22. Der Figur sind weiter Faltlinien 21 zu entnehmen, entlang derer das flächige Material 11 zu einem Faltpaket 10 gefaltet werden kann. Damit beim Falten die fadenförmigen Filtermittel 22 im Bereich der Falten aufeinander abschließen, ist entweder eine Verkettung der Positionierung bei der Fertigung möglich. Damit lässt sich eine so präzise Positionierung der fadenförmigen Filtermittel 22 erzielen, dass diese exakt aufeinander zu liegen kommen. Es kann aber auch das streifenförmige Trägermaterial 27 von Fig. 8 zum Einsatz kommen. In diesem Falls ist das fadenförmige Filtermittel im Bereich der Falten jeweils zwischen einer Lage des streifenförmigen Trägermaterials 27 und einer zu dieser benachbarten Lage des flächigen Materials 11 angeordnet, während zwei aufeinander zu liegen kommende Lagen des streifenförmigen Trägermaterials 27 jeweils aufeinander liegen und damit auch ohne übermäßig genaue Positionierung abdichten. Die Anströmung erfolgt jeweils so, dass das zu filternde Fluid das flächige Material 11 quer zur Zeichenebene anströmt, parallel zur Zeichenebene durch eines der fadenförmigen Filtermittel 22 hindurchtritt und anschließend wieder quer zur Zeichenebene abströmt. Geeignete Leitmittel für die Strömungsführung sind nicht in der Figur dargestellt. Die Rückseite des flächigen Materials 11 kann ebenfalls entsprechend mit einer Vielzahl fadenförmiger Filtermittel 22 ausgebildet sein.

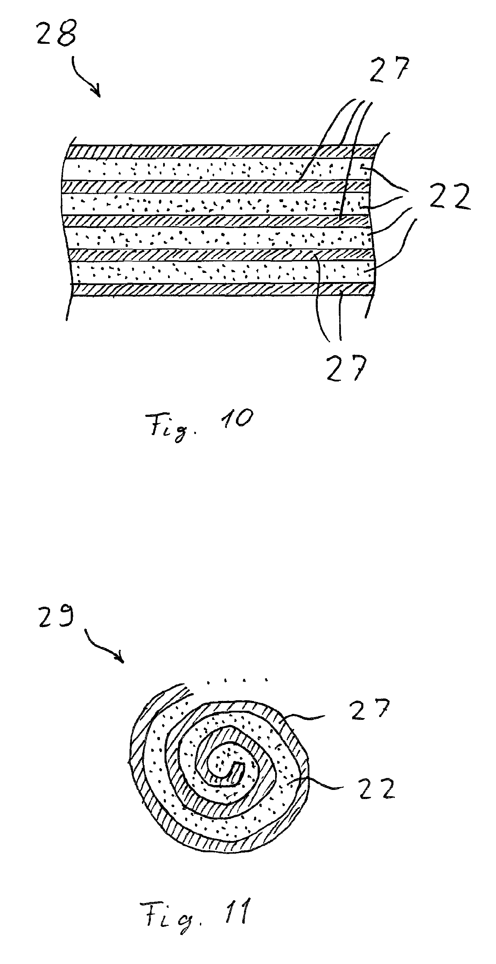

Fig. 10 zeigt ein Filterpaket 28 als Stapel mehrerer Lagen des streifenförmigen Trägermaterials 27 mit dazwischen angeordnetem Filtermittel 22 von Fig. 8. Die Anströmung des Filterpaketes 28 erfolgt in diesem Fall rechtwinklig zur Betrachtungsebene. Es wird so durch die Zickzackanordnung des fadenförmigen Filtermittels 22 eine große angeströmte Oberfläche erzielt, die durch das streifenförmige Trägermaterial 27 offen gehalten wird.

Fig. 11 zeigt ein Filterpaket 29 als Spirale aus dem streifenförmigen Trägermaterial 27 mit dazwischen angeordnetem Filtermaterial 22 von Fig. 8. Die Wirkungsweise entspricht im wesentlichen der von Fig. 10.

Das Aufbringen des Filtermateriales auf das jeweilige Trägermaterial kann bei allen vorhergehend beschriebenen Ausführungsbeispielen im so genannten Meltblown-Verfahren erfolgen. Dabei werden Fasern bei hohem Druck und erhöhter Temperatur auf ein Trägermaterial, wie beispielsweise eine Kunstharzfolie, aufgeblasen. Zur Verstärkung des Anhaftens des so erzeugten Faservlieses ist das Trägermaterial häufig perforiert oder anderweitig zumindest geringfügig durchlässig für ein fluides Medium. Es erfolgt in diesem Fall eine Fluidabsaugung von der dem Faservlies abgewandten Seite des Trägermateriales. **Bezugszeichenliste:**
- 10: Faltpaket
- 11: Flächiges Material
- 12: Abdeckung
- 13: Randabdeckung
- 14: Zentralabdeckung
- 15: Kanäle
- 16: Kanäle
- 17: Faltenkante
- 18: Faltensattel
- 19: Filtermittel
- 20: Freiraum
- 21: Faltlinie
- 22: Fadenförmiges Filtermittel
- 23: Fadenstrang
- 24: Filtermittel
- 25: Querschlitz
- 26: Querschlitz
- 27: Trägermaterial
- 28: Filterpaket
- 29: Filterpaket

## Patentansprüche

1. Filterpaket mit einem flächigen Trägermaterial (11, 27) und mit einem Filtermittel (19, 22, 24), das zwischen zwei einander benachbarten Lagen des flächigen Trägermaterials (11, 27) angeordnet ist, wobei ein Durchströmen der Filtermittel parallel zu dem flächigen Trägermaterial (11, 27) gerichtet erfolgt.

2. Filterpaket nach Anspruch 1, **gekennzeichnet durch** eine Ausbildung als Wärmeübertrager, insbesondere für eine Lüftungsanlage.

3. Filterpaket nach Anspruch 1 oder 2, **gekennzeichnet durch** eine Vielzahl Lagen des flächigen Trägermaterials (11, 27) mit zwischen benachbarten Lagen des flächigen Trägermaterials (11, 27) angeordnetem Filtermittel (19, 22, 24), vorzugsweise **durch** eine stapelförmige Anordnung der Lagen des flächigen Trägermaterials (11, 27) mit zwischen benachbarten Lagen des flächigen Trägermaterials (11, 27) angeordnetem Filtermittel (19, 22, 24), insbesondere **durch** eine spiralförmige Anordnung des flächigen Trägermaterials (11, 27) mit zwischen benachbarten Spiralwindungen als Lagen des flächigen Trägermaterials (11, 27) angeordnetem Filtermittel (19, 22, 24), wobei besonders bevorzugt das Filterpaket ein Faltpaket hat, das Kanäle (15, 16) aufweist, die **durch** mäanderförmiges Falten eines flächigen Materials (11) ausgebildet sind, und in denen das Filtermittel (19, 22, 24) angeordnet ist.

4. Filterpaket nach einem der vorhergehenden Ansprüche, **dadurch gekennzeichnet, dass** das Filtermittel (19, 22, 24) ein Vliesmaterial ist.

5. Filterpaket nach einem der vorhergehenden Ansprüche, **dadurch gekennzeichnet, dass** das Filtermittel (19, 22, 24) als ein schmales Band ausgebildet ist, wobei die Höhe des Bandes, insbesondere im nicht eingebauten Zustand, bevorzugt 1 mm bis 20 mm, besonders bevorzugt 1 mm bis 5 mm, und am meisten bevorzugt 1 mm bis 2 mm beträgt, und wobei vorzugsweise das Band (24) wechselweise seitlich angeordnete Querschlitze (25, 26) aufweist.

6. Filterpaket nach einem der vorhergehenden Ansprüche, **dadurch gekennzeichnet, dass** das Filtermittel (19, 22) als Abstandshalter für einen definierten Abstand zwischen den Lagen ausgebildet ist, wobei der Abstand bevorzugt 0,1 mm bis 0,5 mm, insbesondere 0,1 mm bis 0,3 mm und insbesondere 0,2 mm, beträgt und/oder dass ein fluides Medium beim Durchströmen eines Kanals (15, 16) genau einmal den Querschnitt des Filtermittels (19, 22, 24) durchströmt.

7. Filterpaket nach einem der vorhergehenden Ansprüche, **dadurch gekennzeichnet, dass** das Filtermittel (22) fadenförmig ausgebildet ist, wobei das fadenförmige Filtermittel (22) vorzugsweise längs zur Strömungsrichtung zickzackartig angeordnet ist, und wobei besonders bevorzugt zwischen zwei nebeneinander angeordneten Fadensträngen (23) des, insbesondere zickzackartig angeordneten, fadenförmigen Filtermittels (22) ein spitzer Winkel aufgespannt ist.

8. Filterpaket nach einem der vorhergehenden Ansprüche, **dadurch gekennzeichnet, dass** das Filtermittel (22) auf einem streifenförmigen Trägermaterial (27) angeordnet und/oder dass das Filterpaket als austauschbares Wechselmodul ausgebildet ist.

9. Filterpaket nach einem der vorhergehenden Ansprüche, **dadurch gekennzeichnet, dass** das Filtermittel (19, 22, 24) im mittleren Bereich der Faltensättel (18) angeordnet ist, wobei vorzugsweise das Filtermittel (19, 22, 24) den gesamten Querschnitt des Kanals (15, 16) zwischen den Kanalwänden und einer im mittleren Bereich der Faltensättel (18) angeordneten Zentralabdeckung (14) ausfüllt, wobei das Filtermittel (19, 22, 24) vorzugsweise vor dem Ausbilden der Kanäle (15, 16) auf das flächige Material (11) aufgebracht ist.

10. Filterpaket nach einem der vorhergehenden Ansprüche, **dadurch gekennzeichnet, dass** das Filtermittel (15, 16) auf der zuflussseitigen und/oder abflussseitigen Seite des flächigen Materials (11) aufgebracht ist, wobei vorzugsweise bei einem einseitig auf das flächige Material (11) aufgebrachten Filtermittel (19, 22) der Abstand der Kanalwände, insbesondere zum Realisieren einer gleichen Durchströmrate auf der zuflussseitigen und abflussseitigen Seite des flächigen Materials (11), auf der Seite des flächigen Materials (11) mit dem Filtermittel (19, 22) größer ist als auf der Seite ohne Filtermittel (19, 22).

11. Filterpaket nach einem der vorhergehenden Ansprüche, **dadurch gekennzeichnet, dass** das flächige Material (11) und/oder das Filtermittel (19, 22, 24) als ein hydrophiles, vorzugsweise ein eine Flüssigkeit einsaugendes und/oder ein für die Flüssigkeit durchlässiges, Material ausgebildet ist, wobei das flächige Material (11) vorzugsweise mindestens teilweise aus Papier besteht und/oder luftdicht ist, und wobei insbesondere die aufgenommene Flüssigkeit flächig in dem flächigen Material (11) und/oder dem Filtermittel (19, 22, 24) verteilbar ist.

12. Filterpaket nach einem der vorhergehenden Ansprüche, **dadurch gekennzeichnet, dass** das flächige Material (11) Viren hemmende, Bakterien hemmende, biozide, fungizide und/oder antiseptische Eigenschaften aufweist, und/oder dass sich aufgrund der Filtereigenschaft des Wechselmoduls und/oder des Filtermittels (19, 22) eine Abscheidewirkung für Partikel, insbesondere Staub, Pollen und/oder Aerosole, ergibt, wobei das Fluid vorzugsweise für das Abscheiden von Partikeln ionisiert ist und/oder das flächige Material (11) und/oder das Filtermittel (19, 22) elektrostatisch aufgeladen oder geerdet ist und/oder eine photokatalytische Beschichtung aufweist.

13. Filterpaket nach einem der vorhergehenden Ansprüche, **dadurch gekennzeichnet, dass** das Wechselmodul und/oder der Wärmeübertrager und/oder die Lüftungsanlage eine definierte Schnittstelle für die Übergabe des Fluids und/oder eine Vielzahl Kanäle (15, 16) und Filtermittel, insbesondere eine Vielzahl Filtermittel (19, 22, 24) pro Kanal (15, 16), aufweist.

14. Verwendung eines Filterpaketes nach einem der vorhergehenden Ansprüche in einem Wärmeübertrager und/oder einer Lüftungsanlage, insbesondere beim Austausch des Filterpaketes im Rahmen einer Wartung und/oder Instandsetzung.

15. Wärmeübertrager mit einem Filterpaket nach einem der Ansprüche 1 bis 13.
